(19) Europäisches Patentamt
European Patent Office
Office européen des brevets

(11) **EP 0 975 143 A2**

(12) **EUROPEAN PATENT APPLICATION**

(43) Date of publication:
26.01.2000 Bulletin 2000/04

(51) Int. Cl.⁷: **H04N 1/193**

(21) Application number: 99305149.9

(22) Date of filing: 30.06.1999

(84) Designated Contracting States:
**AT BE CH CY DE DK ES FI FR GB GR IE IT LI LU MC NL PT SE**
Designated Extension States:
**AL LT LV MK RO SI**

(30) Priority: 22.07.1998 US 120669

(71) Applicant:
**Hewlett-Packard Company
Palo Alto, California 94304 (US)**

(72) Inventors:
• **Kochis, Richard L.**
  **Fort Collins, CO 80526 (US)**
• **Redman, David J.**
  **Fort Collins, CO 80525 (US)**
• **Oliver, Thomas C.**
  **Fort Collins, CO 80525 (US)**

(74) Representative:
**Powell, Stephen David et al
WILLIAMS, POWELL & ASSOCIATES
4 St Paul's Churchyard
London EC4M 8AY (GB)**

(54) **Multi-segment linear photosensor assembly**

(57) A multi-segment linear photosensor assembly (10) has linearly aligned, adjacently positioned photosensor array segments each of which comprises at least one linear array (30) of photodetectors (29) where the photodetectors (29) are spaced a constant distance (40) from each other. The photosensor array segments are spaced so that the distance (42) from the last photodetector (77) on one photosensor array segment (20) to the first photodetector (76) on an adjacent photosensor array segment (22) is a multiple of the constant distance (40) between photodetector (29) on a photosensor array segment. A processor (70) may calculate phantom pixel values to insert into the image data from a multi-segment linear photosensor assembly (10). The calculation to determine the phantom pixel values is based upon the first (76) and last (77) photodetector values of adjacent segments. The phantom pixel values are inserted into the multi-segment linear photosensor assembly (10) data as to emulate photodetectors (35) place between adjacent photosensor array segments.

FIG. 6

EP 0 975 143 A2

## Description

The present invention relates to a multi-segment linear photosensor assembly and more particularly to an arrangement of individual photosensor array segments on such an assembly, which minimizes the effects of transitions between segments.

Multi-segment linear photosensir assemblies such as contact image sensor (CIS) assemblies may be used in photoelectric imaging devices to convert scan line portions of an object being imaged to electric signals. One such use of multi-segment linear photosensor assemblies is in optical scanners. The following patents which describe optical scanners are hereby incorporated by reference for all that is disclosed therein: 5,552,597 of McConica for HAND-HELD SCANNER HAVING ADJUSTABLE LIGHT PATH; 5,646,394 of Steinle for IMAGING DEVICE WITH BEAM STEERING CAPABILITY; 5,680,375 of Cristie et al, for ULTRAPORTABLE SCANNER; European patent application number for HAND HELD SCANNING DEVICE filed on the same date as this application and claiming priority from U.S. 09/120,641 and European patent application number for HAND HELD SCANNING DEVICE filed on the same date as this application and claiming priority from U.S. 09/120,637.

A photosensor array segment includes a linear array of photodetector elements (referred to herein simply as photodetectors) and the electronics to support the photodetectors. The individual photodetectors are spaced a constant distance from each other in the linear array and are typically mounted to, or are part of a printed circuit board or substrate. Each individual photodetector generates a data signal corresponding to the intensity of light the photodetector receives. The data signals generated by the photodetectors are typically voltages. Each data signal generated by each photodetector represents one bit of the data generated by the multi-segment linear photosensor assembly, which, in turn, is one bit of the data representing the scan line portion of the object being imaged. The bits of data generated by the multi-segment linear photosensor assembly are commonly referred to as "picture elements" or "pixels." The term, "pixel" is also sometimes used in the art to refer to individual photodetector elements or to the portions of an object that are imaged on these individual photodetector elements.

A multi-segment linear photosensor assembly is a linear array of photodetectors provided on at least two linearly aligned, closely adjacent photosensor array segments. A multi-segment linear photosensor assembly may be used in optical scanners and other optical devices to convert an image of an object to electric signals. The scanner optics focus successive beams of imaging light reflected from scan line portions of the object onto the linear array of photodetectors in a multi-segment linear photosensor assembly. (A scan line is a narrow width portion of the object being imaged.) The multi-segment linear photosensor assembly generates data signals corresponding to the scan line currently focused onto the array of photodetectors. Successive scan line portions of the object are imaged onto the multi-segment linear photosensor assembly until the multi-segment linear photosensor assembly has generated data signals representing the whole object being imaged. The data signals generated by the multi-segment linear photosensor assembly are typically processed and stored in a data storage device, such as a random access memory or a magnetic media. The image data representing the object may be used to create a display image of the object, for example, with a cathode ray tube or a printer.

As previously stated, several photosensor array segments may be linearly aligned to form a multi-segment linear photosensor assembly. The multi-segment linear photosensor assembly ultimately forms a linear array of photodetectors extending from the first photosensor array segment to the last photosensor array segment. Multi-segment linear photosensor assemblies typically have disparities in the linear array of photodetectors in the areas between the photosensor array segments. The disparities in the photodetector array may be due to the photodetector spacing in the areas between adjacent photosensor array segments being different from the constant photodetector spacing on individual photosensor array segments. The spacing of adjacent photosensor array segments may create photodetector spacings between adjacent ends of the segments that are larger or smaller than the constant spacing between individual photodetectors on a photosensor array segment. Typically, the photodetector spacing between the photodetectors at the ends of adjacent photosensor array segments is greater than the constant photodetector spacing on individual photosensor array segments. When the photodetector spacing between adjacent photosensor array segments is greater than the constant photodetector spacing on individual photosensor array segments, gaps may occur in the linear array of photodetectors. The absence of a photodetector element in the gap creates errors in the image data generated by the multi-segment linear photosensor assembly.

The areas of the object corresponding to the gaps in the photodetector array between photosensor array segments may be disregarded during imaging. This lack of imaging between photosensor array segments may cause the image of the object generated by the multi-segment linear photosensor assembly data to be distorted in these areas. Further distortions in the image may be caused by the linear array of photodetectors being inconsistent in the areas between the photosensor array segments. The inconsistencies may be due to the spacing between photodetectors across the gaps being different from the constant spacing between photodetectors on a photosensor array segment. These inconsistencies may cause breaks or distortions to occur in the image that are not present in the object. Additionally, the gaps in the photodetector array may cause the size of the image generated by the multi-segment linear photosensor assembly data to be smaller than an accurate image of an object by an amount proportional to the total distance of the areas between photosensor array segments where imaging cannot occur.

The photosensor array segments are difficult to manufacture with enough precision so they may abut each other and maintain a constant, uninterrupted array of photodetectors. The distances between the photodetectors nearest the ends of the photosensor array segments and the ends of the photosensor array segments themselves are difficult to control. One manufacturing variable affecting the photosensor array segments is the tolerances in the machinery used to cut the substrates from the wafer or board on which the photodetectors are placed. The tolerances in the machinery may be too broad to achieve the desired edge locations on the photosensor array segments. Because the edge locations of the photosensor array segments are difficult to control, the distances from the photodetectors to the edges of the photosensor array segments may be difficult to control. This uncertainty in the location of the edges of the photosensor array segments relative to the photodetector array makes it difficult to position the photosensor array segments so that they abut and form an uninterrupted linear array of photodetectors.

Additionally, cutting the substrates too close to the end photodetectors may adversely affect the performance or damage the accompanying photodetector electronics. Therefore, manufacturers typically leave additional space on the ends of the photosensor array segments to assure that the end photodetectors function properly. This additional space on the ends of the photosensor array segments may create the aforementioned inconsistencies in the linear array of photodetectors when the photosensor array segments are positioned so that they abut each other. Therefore, it is difficult, if not impossible, to maintain the constant photodetector spacing throughout a multi-segment linear photosensor assembly when the photosensor array segments abut each other.

One type of photosensor array segment that may be provided in a multi-segment linear photosensor assembly is a contact image sensor ("CIS"). CIS type multi-segment linear photosensor assemblies used in optical scanners may be approximately one third of an inch long and have approximately 102 linearly aligned photodetectors mounted to them. A hand-held scanner may have approximately 13 linearly aligned CIS's in the multi-segment linear photosensor assembly to form a linear sensor array that is approximately four and one half inches long. A contact image sensor-type scanner that scans a standard eight and one half inch wide page may have approximately twenty-five photosensor array segments in its multi-segment linear photosensor assembly. An example of a commercially available photosensor array segment is known as the Linear Optical Array, Model Number TSL2301, manufactured by Texas Instruments, Inc. of Austin, Texas. One such scanning device employing a contact image sensor is disclosed in the United States Patent, serial number _____ of Bybee for PHOTOELECTRIC IMAGING APPARATUS AND METHOD OF USING filed on the same date as this application (attorney docket number 10950201-1).

A contact image sensor-type optical scanner images an object as previously set forth by directing an image beam of light reflected from the object being imaged onto the array of photodetectors in a multi-segment linear photosensor assembly. The image beam received by the multi-segment linear photosensor assembly corresponds to a currently imaged narrow scan line portion of the object. The multi-segment linear photosensor assembly generates data signals representing the currently imaged scan line portion of the object. The multi-segment linear photosensor assembly generates data representing the successive scan lines of the object which are imaged thereon. The total collection of data from such scan lines represents an image of the entire object.

The linear density of photodetectors on the photosensor array segments used with contact image sensor-type scanners is typically very low. Therefore, in order to avoid degradation in the image, the object is typically focused onto the array of photodetectors in the multi-segment linear photosensor assembly using a lens with a 1:1 optical ratio. To accommodate this 1:1 object to image ratio, the multi-segment linear photosensor assembly used with a contact image-type scanner must extend the same length as a desired scan line. The multi-segment linear photosensor assembly must therefore comprise a plurality of photosensor array segments, which may yield the aforementioned problems associated with multi-segment linear photosensor assemblies.

As previously stated, a hand-held optical scanner using a CIS type multi-segment linear photosensor assembly may have approximately 13 photosensor array segments comprising the multi-segment linear photosensor assembly. This represents 12 transitions between photosensor array segments, which represents 12 likely disparities in the photodetector array. The image generated by the use of a hand-held scanner using a CIS type multi-segment linear photosensor assembly may have 12 areas extending across the length of each scan path where the image is distorted. The areas of distortion would occur during each of the successive scans needed to completely scan the object. The image generated by the contact image sensor-type scanner image may also be smaller than an accurate representation of the object by an amount proportional to the size of the gaps in the photodetector array. The practice in the optical scanning art is to abut photosensor array segments, which increases the imaging errors as the number of photosensor array segments accumulate. In addition, the imaging errors may be exacerbated as the density of photodetectors on a photosensor array segment is increased.

The problems associated with photosensor array segment placement in multi-segment linear photosensor assemblies generally do not exist in optical imaging devices using charged coupled devices as the photosensor assemblies. A charged coupled device is an imaging device having a high concentration of linearly aligned photodetectors mounted to it, e.g., 2,700 photodetectors may be mounted to an inch long charged coupled device. The photodetectors are typically fabricated into the substrate of the charged coupled device by semiconductor fabrication techniques that are known in the art. The concentration of photodetectors on a single charged coupled device is generally high enough so that a single charged coupled device may image a scan line which is several times the length of the charged coupled device. For example, a single charged coupled device may image a page of text that is 8.5 inches wide using a scan line that is 8.5 inches long. Additional optics and an extended imaging light path are generally required in a charged coupled device-type imaging device in order to create an extended focal length to focus a substantially reduced (e.g., 8:1) image of the object onto the single charged coupled device.

Many types of photosensor array segments, including those used with contact image sensor-type scanners cannot achieve the high concentration of photodetectors of a charged coupled device. Therefore, a suitable length scan line of the object may not be focused onto a single photosensor array segment and thus, a multi-segment linear photosensor assembly may be required to achieve a suitable scan line length. It would therefore be generally desirable to provide a multi-segment linear photosensor assembly that overcomes the aforementioned problems associated with using multiple photosensor array segments to form a linear array of photodetectors.

The present invention is directed toward an improved multi-segment linear photosensor assembly. The improved multi-segment linear photosensor assembly may be comprised of at least two linearly aligned, adjacently positioned photosensor array segments. The photosensor array segments may comprise at least one linear array of photodetectors extending between the ends of the photosensor array segments. The photodetectors are spaced a constant distance from each other on each photosensor array segment. The improved multi-segment linear photosensor assembly uses the constant photodetector spacing on the photosensor array segments as a basis for the spacing between the photosensor array segments. The spacing between photosensor array segments is such that the distance between photodetectors of adjacent photosensor array segments is equal to a multiple of the constant distance between photodetectors on individual photosensor array segments.

A linear array of photodetectors may be formed by the linear alignment of the photosensor array segments, which comprise the multi-segment linear photosensor assembly. The linear array of photodetectors may extend approximately the distance of the multi-segment linear photosensor assembly. The resulting array of photodetectors in the multi-segment linear photosensor assembly may have gaps in the areas between the photosensor array segments. The widths of the gaps in the photodetector array are multiples of the constant distance between photodetectors on individual photosensor array segments. No photodetectors are located in the gaps between photosensor array segments, and therefore, no imaging may occur in the areas between the photosensor array segments.

The individual photodetectors in the multi-segment linear photosensor assembly output data signals having values corresponding to the intensity of light the individual photodetectors receive. These data signal values are commonly referred to as "pixel values." The light received by the multi-segment linear photosensor assembly corresponds to the image of a narrow scan line portion of the object which is currently being imaged. The photodetectors in the multi-segment linear photosensor assembly at each operating interval thereof output signal values representing the image of the narrow scan line portion of the object imaged thereon during that operating interval. Data signals from successive scan lines may be collected to represent an image of the whole object being imaged.

A processor may measure the values of the photodetector output signals on both sides of the gaps in the photodetector array between photosensor array segments after each photodetector operating interval. The processor may then use these photodetector values to calculate "phantom pixel" values, which may be inserted into the data output from the multi-segment linear photosensor assembly so as to emulate photodetectors located in the gaps in the photodetector array. The gaps in the photodetector array are located between adjacent photosensor array segments, so the phantom pixels values are inserted at corresponding positions in the multi-segment linear photosensor assembly data. The widths of the gaps in the photodetector array between photosensor array segments allow for a whole number of phantom pixel values to be inserted into each photodetector gap.

The processor may insert the phantom pixel values into the image data generated by the multi-segment linear photosensor assembly so as to emulate the image of the object at the gaps between photosensor array segments where imaging cannot occur. Therefore, the areas of the object that are unable to be imaged due to gaps in the photodetector array may have pixel values assigned to them through the use of phantom pixels. The image created by the use of the phantom pixels will be as though the multi-segment linear photosensor assembly consisted of an uninterrupted linear array of photodetectors all spaced a constant distance from each other.

The phantom pixels may have values assigned to them through various calculations. The calculations to assign values to the phantom pixels may include linear interpolation, extrapolation, and averaging. Linear interpolation may use the values of the photodetectors nearest the gaps in the photodetector array between adjacent photosensor array segments to linearly interpolate the phantom pixel values. Averaging may assign the average value of the photodetector values nearest the gaps in the photodetector array between adjacent photosensor array segments to the phantom pixel values. Extrapolation may be used when an area of high contrast is being imaged and the area of high contrast exists between adjacent photosensor array segments. Extrapolation may assign the values of the photodetectors nearest the gaps in the photodetector array between adjacent photosensor array segments to the phantom pixel values. The image data generated by the use of extrapolation may maintain an area of high contrast in the image of the object that may be present in the actual object.

The improved multi-segment linear photosensor assembly may be used in a contact image sensor-type scanning device. A contact image sensor-type scanning device typically has a multi-segment linear photosensor assembly located in close proximity to the object being imaged. The multi-segment linear photosensor assembly may be comprised of a linear arrangement of photosensor array segments, often referred to as contact image sensor semiconductors. The contact image sensor semiconductors have at least one linear array of photodetectors mounted to them. The photodetectors on a contact image sensor semiconductor are spaced a constant distance from each other and extend between the ends of the contact image sensor. The individual photodetectors, and hence, the contact image sensor semiconductors output data, typically in the form of voltages, corresponding to the intensity of light the photodetectors receive. The contact image sensor semiconductors may be linearly aligned to form a multi-segment linear photosensor assembly. The output data from the multi-segment linear photosensor assembly may, therefore, represent a narrow scan line portion of the object being imaged. Successive scan line portions of the object may be imaged to form an image of the object.

The placement of the contact image sensor semiconductors in the multi-segment linear photosensor assembly is based on the constant distance between photodetectors on the contact image sensor semiconductors. The centerline distance between photodetectors of adjacent contact image sensor semiconductors is a multiple of the constant centerline distance between photodetectors on individual contact image sensor semiconductors. A processor may then assign phantom pixel values to fill the gaps in the linear array of photodetectors between contact image semiconductors as previously set forth.

The distance between photodetectors of adjacent contact image sensor semiconductors should be the smallest multiple of the constant distance between photodetectors on a contact image sensor semiconductor as possible. A smaller distance between photodetectors of adjacent contact image sensor semiconductors may minimize the number phantom pixel values that needs to be generated. The use of fewer phantom pixel values in the image data may minimize image degradation upon processing because the image data will be created by the use of actual photodetector values rather than calculated phantom pixel values.

The image distortion caused by inconsistencies in the photodetector arrays in multi-segment linear photosensor assemblies is reduced by the preselected spacing of photosensor array segments and the generation of phantom pixels. Various processing techniques may be used to assign values to the phantom pixels. The improved multi-segment linear photosensor assembly may reduce image degradation without any modifications to the photosensor array segment architecture.

Fig. 1 is a schematic illustration depicting the placement of two photosensor array segments in a multi-segment linear photosensor assembly.

Fig. 2 is a schematic illustration depicting an embodiment of the circuitry to process data from photodetectors in a multi-segment linear photosensor assembly.

Fig. 3 is a schematic illustration depicting several photosensor array segments linearly aligned to form a multi-segment linear photosensor assembly.

Fig. 4 is a schematic illustration depicting the placement of photosensor array segments where large gaps exist between photosensor array segments.

Fig. 5 is a schematic illustration depicting the use of a multi-segment linear photosensor assembly in a contact image sensor-type scanning device.

Fig. 6 is a flow chart illustration of a process to determine phantom pixel values.

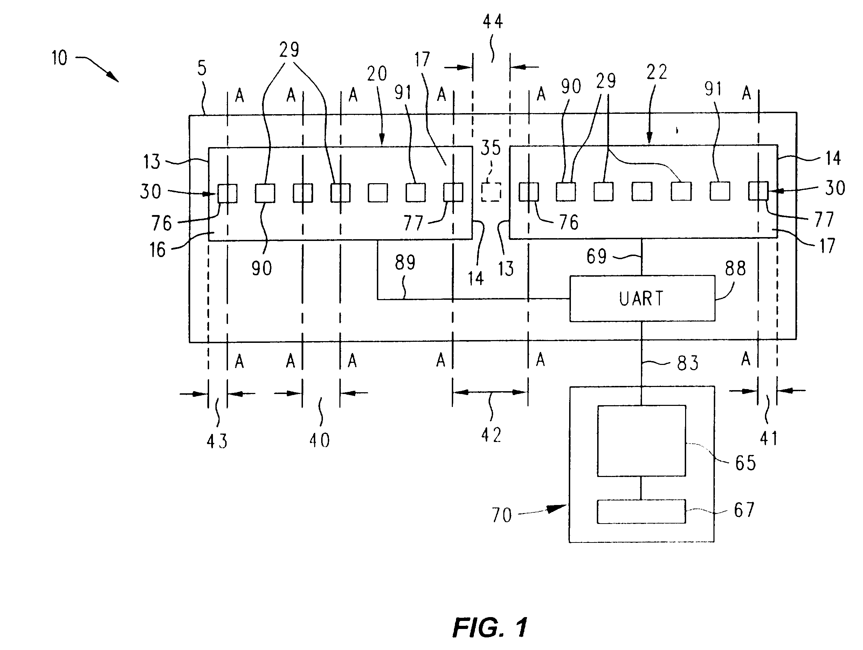

Figs. 1-6 illustrate a multi-segment linear photosensor assembly 10 comprising at least two adjacent photosensor array segments 20 and 22, Fig. 1. Each photosensor array segment may have a first end 16 and a second end 17 with at least one linear array 30 of photodetectors 29 formed thereon extending between the first end 16 and the second end 17 thereof. The array of photodetectors 30 includes a first photodetector 76 located at the first end 16 of the photosensor array segment and a last pixel 77 located at the second end 17 of the photosensor array segment. Each of the individual photodetectors 29 in the linear array of photodetectors 30 has a centerline AA wherein the distance 40 between the centerlines of adjacent photodetectors 29 on the photosensor array segments 20 and 22 is a constant distance. The photosensor array segments 20 and 22 are aligned to form a linear array of photodetectors 30 where the distance 42 between the last photodetector 77 on the first photosensor array segment 20 and the first photodetector 76 on the last photosensor array segment 22 is a distance of twice the constant centerline distance 40 between the photodetectors 29.

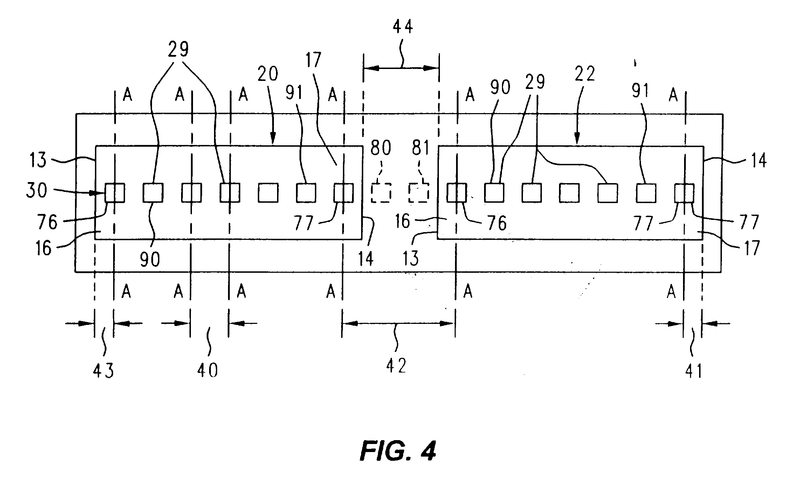

Figs. 1-6 also illustrate a multi-segment linear photosensor assembly 10 comprising at least two adjacent photosensor array segments 20 and 22, Fig 4. Each photosensor array segment 20 and 22 may have a first end 16 and a second end 17 and may comprise at least one linear array 30 of photodetectors 29 formed thereon extending between the first end 16 and the second end 17 thereof. The array of photodetectors 30 includes a first photodetector 76 located at the first end 16 of the photosensor array segment and last photodetector 77 located at the second end 17 of the photosensor array segment. Each of the individual photodetectors 29 in the linear array of photodetectors 30 has a centerline AA wherein the distance 40 between the centerlines of adjacent photodetectors 29 on the photosensor array segments 20 and 22 is a constant distance. The photosensor array segments 20 and 22 are aligned to form a linear array of photodetectors 30 such that the distance 42 between the last photodetector 77 on the first photosensor array segment 20 and the first photodetector 76 on the last photosensor array segment 22 is a distance that is a multiple of the constant distance 40 between the photodetectors 29.

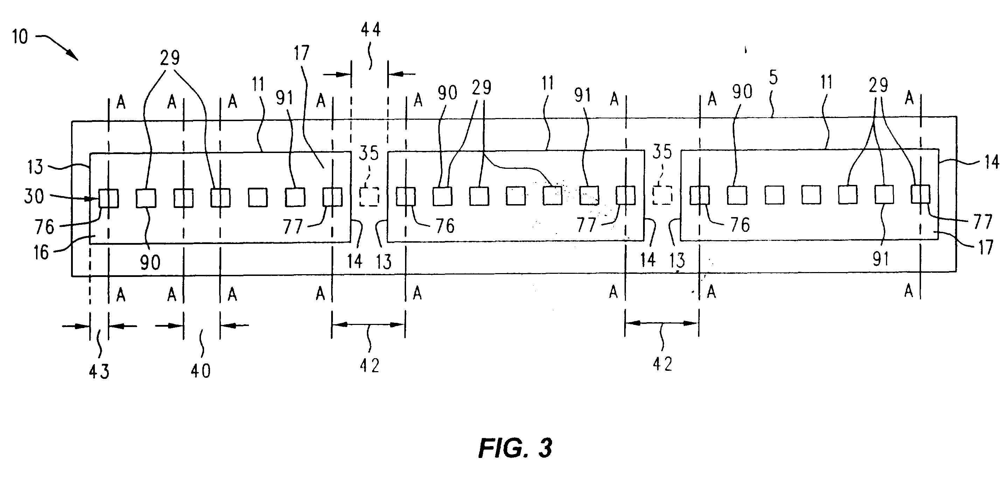

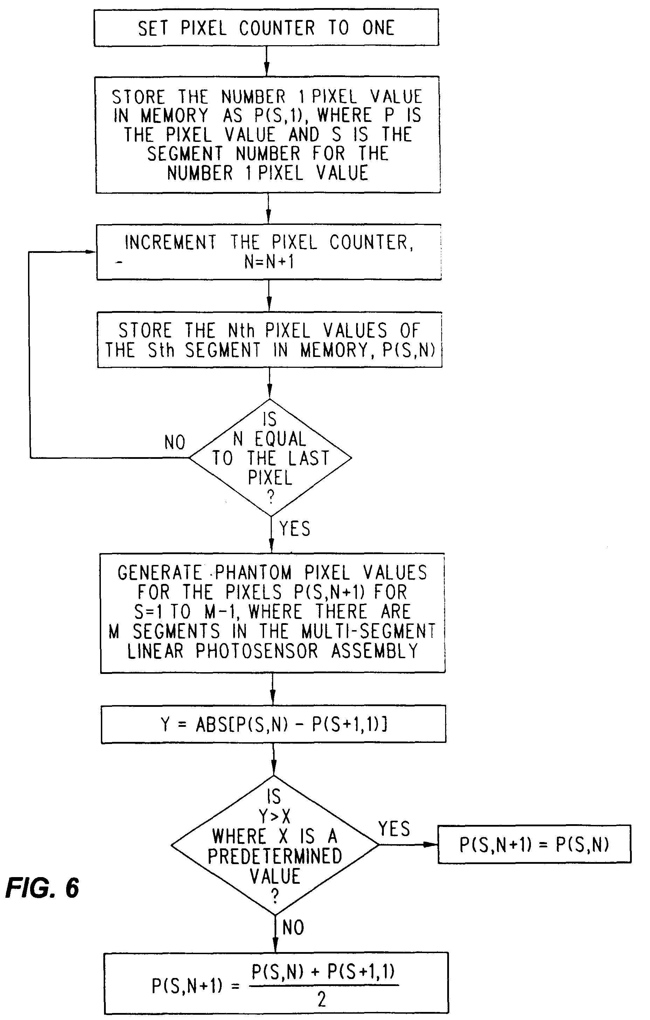

Figs. 1-6 further illustrate a multi-segment linear photosensor assembly 10 comprising a plurality of adjacent photosensor array segments 11, Fig. 3. Each photosensor array segment 11 may have a first end 16 and a second end 17 and may comprise a linear array of photodetectors 30 formed on the photosensor array segments 11 extending between the first end 16 and said second end 17. Each of the photodetectors 29 has a centerline AA wherein the photodetectors 29 are spaced a constant distance 40 from each other relative to the centerlines. The linear array of photodetectors 30 includes a first photodetector 76 proximately located at the first end 16 of the photosensor array segment 11 and a last photodetector 77 proximately located at the second end 17 of the photosensor array segment 11. The photosensor array segments 11 are aligned to form a linear array of photodetectors 30 such that the distance between the last photodetector 77 on one photosensor array segment 11 and the first photodetector 76 on an adjacent photosensor array segment 11 is a multiple of the centerline distance 40 between the photodetectors 29. The multi-segment linear photosensor assembly 10 may be operatively connected to a data storage device 67 that stores the signal values of the photodetectors 29, Fig 1. The multi-segment linear photosensor assembly 10 may also be operatively connected to a processor 70 that generates phantom pixel values. The processor 70 may generate the phantom pixel values based on the signal values of the first and last photodetectors 76 and 77 at locations 35 between the photosensor array segments 11, Figs. 3 and 6. The processor 70 may store the phantom signal values in the data storage device 67 as to emulate photodetectors at the locations 35 between the photosensor array segments 11.

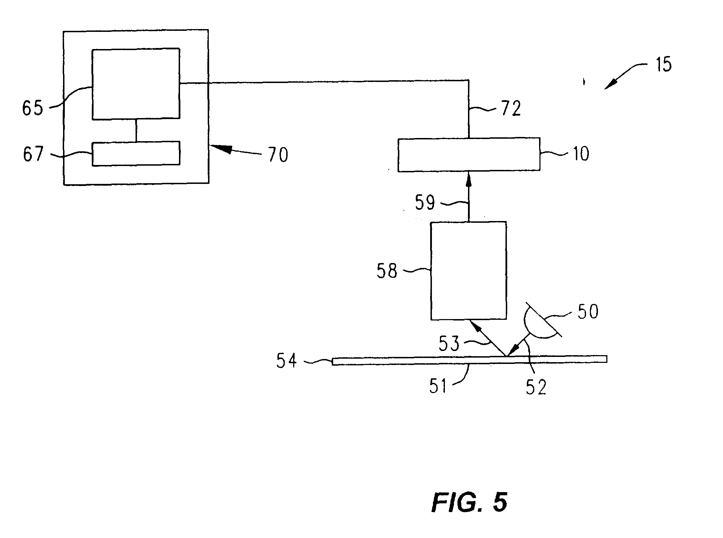

Figs. 1-6 also illustrate an optical scanner 15 using a multi-segment linear photosensor assembly 10, Fig. 5. The multi-segment linear photosensor assembly comprises at least two adjacent photosensor array segments 20 and 22, Fig 4. Each photosensor array segment 20 and 22 may have a first end 16 and a second end 17 and may comprise at least one linear array 30 of photodetectors 29 formed thereon extending between the first end 16 and the second end 17 thereof. The array of photodetectors 30 includes a first photodetector 76 located at the first end 16 of the photosensor array segment and last photodetector 77 located at the second end 17 of the photosensor array segment. Each of the individual photodetectors 29 in the linear array of photodetectors 30 has a centerline AA wherein the distance 40 between the centerlines of adjacent photodetectors 29 on the photosensor array segments 20 and 22 is a constant distance. The photosensor array segments 20 and 22 are aligned to form a linear array of photodetectors 30 such that the distance 42 between the last photodetector 77 on the first photosensor array segment 20 and the first photodetector 76 on the last photosensor array segment 22 is a distance that is a multiple of the constant distance 40 between the photodetectors 29.

Figs. 1-6 further depict a method of minimizing image distortions between photosensor array segments 20 and 22 in a multi-segment linear photosensor assembly 10, Fig. 1. The multi-segment linear photosensor assembly 10 comprises at least two adjacent photosensor array segment 20 and 22. The photosensor array segments 20 and 22 have a first end 16 and a second end 17 and comprise at least one linear array of photodetectors 30 extending between the first end 16 and the second end 17. The linear array of photodetectors 30 has a first photodetector 76 proximately located at the first end 16 and a last photodetector 77 proximately located at the second end 17. Each of the photodetectors 29 has a centerline AA wherein the photodetectors 29 are spaced a constant distance 40 from each other based on the centerlines. The method comprises aligning the photosensor array segments 20 and 22 so that the first end 16 of one photosensor array segment 22 is next adjacent the second end 17 of an adjacent photosensor array segment 20. The photosensor array segments 20 and 22 are positioned a distance from each other so that the distance 42 between the last photodetector 77 on one photosensor array segment 20 and the first photodetector 76 on an adjacent photosensor array segment 22 is a multiple of the constant distance 40 between photodetectors 29 on the photosensor array segments 20 and 22.

Having thus described the multi-segment linear photosensor assembly and a method of imaging in general, the multi-segment linear photosensor assembly and method of imaging will now be described in further detail.

Fig. 1 depicts an embodiment of a multi-segment linear photosensor assembly 10 electrically connected to a processor 70. The multi-segment linear photosensor assembly 10 may comprise at least two photosensor array segments 20 and 22 mounted to a board 5. The board 5 may be a printed circuit board as is known in the art. The segments 20 and 22 may have a first edge 13 and a second edge 14 and the segments 20 and 22 may be approximately one third of an inch between the edge 13 and the edge 14. The segments 20 and 22 may have first ends 16 in the proximate locations of the first edges 13. The segments 20 and 22 may also have second ends 17 in the proximate locations of the second edges 14. Each segment 20 and 22 may further have a linear array of photodetectors 30 extending between the first end 16 and the second end 17. The linear array of photodetectors 30 may comprise individual photodetectors 29 spaced a constant distance 40 from each other based upon the centerlines of the individual photodetectors 29. The segments 20 and 22 may have approximately 64 individual photodetectors 29 in the linear array of photodetectors 30. The segments 20 and 22 may have multiple arrays of photodetectors 30 depending upon the imaging application. When multiple arrays of photodetectors 30 are mounted to the segments 20 and 22, the photodetector arrays 30 are typically parallel to each another and do not affect the improved multi-segment linear photosensor assembly 10.

Each segment 20 and 22 may have a first photodetector 76 and a last photodetector 77. The first photodetectors 76 may be proximately located at the first ends 16 of the segments 20 and 22. The last photodetectors 77 may be proximately located at the second ends 17 of the segments 20 and 22. The first photodetectors 76 may be located a distance 43 from the centerlines of the first photodetectors 76 to the first edges 13. The last photodetectors 77 may be located a distance 41 from the centerlines of the last photodetectors 77 to the second edges 14. The distances 41 and 43 are not necessarily equal and the distances 41 and 43 may vary from segment 20 to segment 22. Each segment 20 and 22 may have a second photodetector 90 located next adjacent the first photodetector 76. Each segment 20 and 22 may further have a second to last photodetector 91 located next adjacent the last photodetector 77.

The segments 20 and 22 may be spaced so that the last photodetector 77 on the segment 20 is next adjacent to the first photodetector 76 on the segment 22. A gap 44 may then be left between the first edge 13 of the segment 22 and the second edge 14 of the segment 20. The distance 42 is then created by the gap 44, the distance 42 is the centerline distance between the last photodetector 77 on segment 20 and the first photodetector 76 on segment 22. The multi-segment linear photosensor assembly 10 may have the segments 20 and 22 spaced such that the distance 42 between the last photodetector 77 of segment 20 and the first photodetector 76 of segment 22 is a multiple of the distance 40. As previously set forth, the distance 40 is the constant distance between the individual photodetectors 29 on the segments 20 and 22. With this spacing of segments 20 and 22, a whole number of phantom pixel locations may be created in the distance 42. In the embodiment depicted in Fig.1, one phantom pixel location 35 has been created between the segments 20 and 22. The distance 42 may represent a gap in the photodetector array 30, so the lowest multiple of the distance 40 should be used to determine the distance 42 so as to minimize the distance 42. Typically, the segments 20 and 22 are manufactured such that the minimum distance 42 may be twice the distance 40 as depicted in Fig. 1.

The multi-segment linear photosensor assembly 10 may also have a universal asynchronous receiver transmitter circuit (UART) 88 mounted to the board 5. The UART 88 may be electrically connected to the segments 20 and 22 by data lines 89. The UART circuit 88 may also be electrically connected to a processor 70 by a command line 83. The UART 88 may serve to transfer data and commands between the processor 70 and the segments 20 and 22.

The processor 70 may include a microprocessor 65 and a data storage device 67. The microprocessor 65 may be electrically connected to the data storage device 67. The microprocessor 65 may have the ability to process image data from a multi-segment linear photosensor assembly and store the image data in the data storage device 67 as is known in the art. The data storage device 67 may be, for example, a random access memory or a magnetic media.

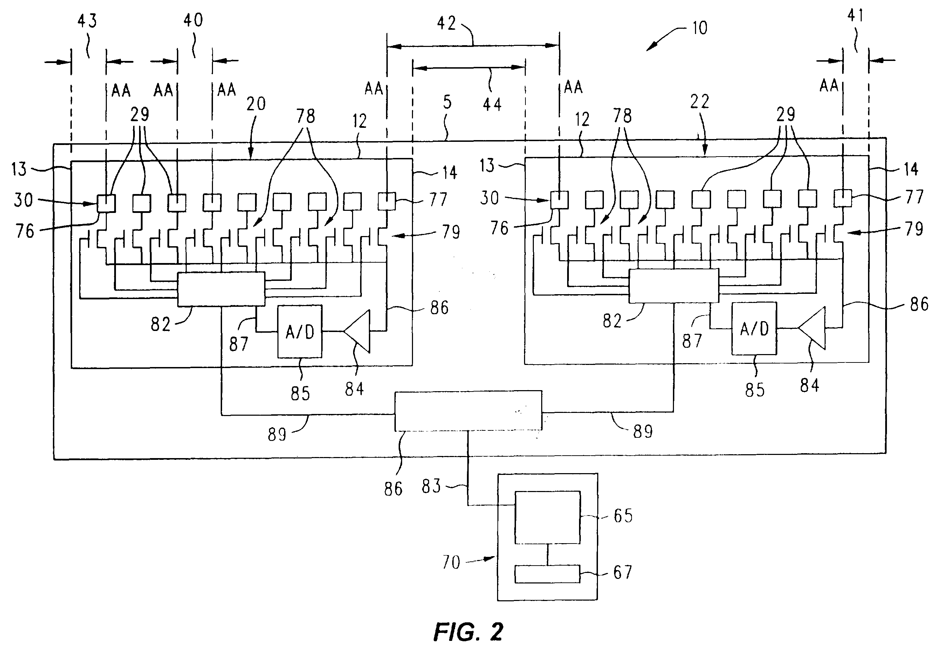

Fig. 2 illustrates an embodiment of the general circuitry that may comprise a multi-segment linear photosensor assembly 10. Each segment 20 and 22 may have a linear array of photodetectors 30 mounted to the segments 20 and 22 as previously described. The linear arrays of photodetectors 30 may comprise a plurality of linearly aligned individual photodetectors 29. Each individual photodetector 29 may be electrically connected to an individual switch or gate 78 that is normally open. There are a plurality of individual switches 78 to form an array of switches 79. The outputs of the array of switches 79 may be connected to a data line 86. which in turn, may be connected to an amplifier 84. The output of the amplifier 84 may be connected to an analog to digital converter 85. The output of the analog to digital converter 85 may be connected to a universal asynchronous receiver transmitter circuit (UART) 82 via a data line 87. The UART 82 may be physically mounted on the segments 20 and 22. The UART 82 may further be connected to the array of switches 79 so as to control whether the individual switches 78 are open or closed. The UART 82 may also be electrically connected to the UART 88 mounted on the board 5 by a data line 89. The UART 88 may be electrically connected to the processor 70 by a command line 83. The UART 88 may serve to transfer data and commands between the segments 20 and 22 and the processor 70.

The array of switches 79 may be sequentially closing switches so that only one individual switch 78 at a time is closed. The closing sequence for the array of switches 79 may start with the first photodetector 76 and finish with the last photodetector 77 on each segment 20 and 22. The amplifier 84 may be a voltage amplifier as is known in the art. The analog to digital converter 85 may convert electrical voltages to binary numbers as is known in the art. The UARTs 82 and 88 may serve to receive and transmit binary data in a serial format as is known in the art.

Each individual photodetector 29 in the photodetector array 30 may output a voltage relative to the light intensity received by the individual photodetectors 29. The voltage from an individual photodetector 29 in the photodetector array 30 may be present at the individual switch 78 corresponding to the individual photodetector 29. The processor 70 may determine which segment is to be processed, the processor 70 may then send a command on the command line 83 to the UART 88 indicating which segment is to be processed. In response from the command from the processor 70, the UART 88 may send a command via the data line 89 to the UART 82 on the segment which is to be processed. The UART 82 may output a command to sequentially close the array of switches 79 on the segment which is to be processed. When an individual switch 78 closes, the voltage on the data line 86 becomes equal to the voltage output of the corresponding individual photodetector 29 in the photodetector array 30. The voltage on the data line 86 may then be amplified by the amplifier 84 and input to the analog to digital converter 85. The analog to digital converter 85 may convert the analog voltage from the amplifier 84 to a digital binary number. The binary number generated by the analog to digital converter 85 may be representative of the intensity of light received by the individual photodetector 29 being processed. The binary number generated by the analog to digital converter 85 may then be input to the UART 82 via the data line 87. The binary number may then be output from the UART 82 to the UART 88 via the data line 89. The UART 88 may then output the binary number via the command line 83 to the processor 70 for processing.

The processor 70 may receive the binary number from the UART 88 and process the binary number through the microprocessor 65. The microprocessor 65 may output the binary number to the data storage device 67 for use at a later time. The microprocessor 65 may also output data to the data storage device 67 relating to the location of the individual photodetector 29 being processed. For example, the microprocessor 65 may output data to the data storage device 67 indicating the segment and location of the individual photodetector 29 being processed. Therefore, the processor 70 may be able to determine when the values of a first photodetector 76 and a last photodetector 77 on a given segment are being processed and where the values are stored in the data storage device 67.

The light received by the array of photodetectors 30 on the segments 20 and 22 may correspond to an image beam of the object being imaged. Specifically, the image beam may represent a narrow scan line portion of the object. Successive scan line portions of the object may be imaged by the multi-segment linear photosensor assembly 10 and processed by the processor 70 to create an electrical image of the object.

Referring again to Fig. 1, when the segments 20 and 22 are spaced such that the distance 42 is twice the distance 40, a single phantom pixel value for the location 35 may be generated by the processor 70 to fill the gap 42. The processor 70 may calculate a value for the phantom pixel location 35 based on the values of the first photodetector 76 of the segment 22 and last photodetector 77 on the segment 20. The phantom pixel value generated for the location 35 may be inserted into the image data from the multi-segment linear photosensor assembly 10 as though a photodetector existed in the gap 42 at the location 35. During imaging, the linear array of photodetectors 30 may appear as though the linear array of photodetectors 30 is constant and uninterrupted through the transition from the segment 20 to the segment 22.

Some photosensor array segments are manufactured such that the distance between the first photodetector 76 and the second photodetector 90 is not the constant distance 40 as is the distance between the remaining photodetectors 29. Likewise, the distance between the last photodetector 77 and the second to last photodetector may not be the constant distance 40. In this event, the segments 20 and 22 may be spaced such that the centerline distance from the second photodetector 90 on the segment 22 to the second to last photodetector 91 on the segment 20 is a multiple of the constant distance 40 between photodetectors 29 in the photodetector array 30. This placement may not fully alleviate distortions in the image generated by the multi-segment linear photosensor assembly 10, however, the distortions may be minimized.

In the event the sum of the distances 41 and 43 is less that the distance 40, no phantom pixels may need to be calculated. In this event, the photosensor array segments 20 and 22 may be placed so that the first photodetector 76 of the segment 22 and the last photodetector 77 of the segment 20 are a distance 40 from each other. The phantom pixel value for location 35 is thereby eliminated. This placement of the segments 20 and 22 may allow the multi-segment linear photosensor assembly 10 to function with no interruption in the linear array of photodetectors 30 and without generating any phantom pixels.

During manufacturing of the photosensor array segments 20 and 22, the substrate 12, from which the segments 20 and 22 may be manufactured, may be cut from a wafer or other circuit material. Due to the physical variables involved in cutting the substrate 12, it is difficult to control the cutting tolerances with a high degree of accuracy. Additionally, the electronics surrounding the first and last photodetectors 76 and 77, and the photodetectors themselves, may be damaged should the substrate 12 be cut too close to the photodetectors 76 and 77. It is therefore difficult to constantly maintain the distances 41 and 43 at a constant value. The spacing of the segments 20 and 22 may therefore by used to create the phantom pixel location 35, which may assure that, with regard to imaging, the individual photodetectors 29 are spaced a constant distance 42 from each other throughout the photodetector array 30 on segments 20 and 22.

Fig. 3 depicts the placement of several individual photosensor array segments 11 on a board 5 to form a multi-segment linear photosensor assembly 10. The segments 11 may be substantially similar to each other. Each segment 11 may have a first edge 13 and a second edge 14. Each segment 11 may have a first end 16 in the proximate location of the first edge 13 and a second end 17 in the proximate location of the second edge 14. Each segment 11 may have a plurality of photodetectors 29 mounted to the segments 11 and spaced a constant distance 40 from each other. The photodetectors 29 may be aligned to form at least one linear array of photodetectors 30 extending from the first end 16 to the second end 17. The photodetectors 29 may be spaced a constant distance 40 from each other throughout the linear array of photodetectors 30. Each segment 11 may further have a first photodetector 76 proximately located at the first end 16. Each segment 11 may also have a last photodetector 77 proximately located at the second end 17.

The segments 11 may be spaced on the board 5 so that a distance 42 exists between the last photodetector 77 on one segment 11 and the first photodetector 77 on an adjacent segment 11. The distance 42 may be a multiple of the constant distance 40 between individual photodetectors 29 on a segment 11. The number of segments 11 that may be placed on the board 5 may, in theory, be unlimited so long as the spacing of the segments 11 continues to maintain the distance 42 between a last photodetector 77 on one segment 11 and the first photodetector 76 of next adjacent segment 11. Phantom pixel locations 35 may be created in the gaps 42 at the locations where the segments 11 are adjacent to each other. A separate calculation to generate the phantom pixel values for the phantom pixel locations 35 may be performed at each location where the segments 11 are adjacent to each other.

Fig. 4 depicts a situation where there is a wide distance 42 between the segments 20 and 22. The distance 42 is wide enough for two phantom pixel locations 80 and 81 to be located in the gap created by the distance 42 between the segments 20 and 22. The multi-segment linear photosensor assembly 10 depicted in Fig. 4 is the same as the multi-segment linear photosensor assembly 10 depicted in Fig. 1, except that the distance 42 is wider in the multi-segment linear photosensor assembly 10 depicted in Fig. 4. In the multi-segment linear photosensor assembly 10 depicted in Fig. 4, the distance 42 is three times the distance 40. The extended distance 42 may be the result of an increase in the density of the photodetectors 29 in the photodetector array 30 or other factors affecting the placement of the segments 20 and 22. Phantom pixel values may need to be generated for the two phantom pixel locations 80 and 81. As previously set forth, a processor may calculate the phantom pixel values based on the values of the photodetectors 76 and 77 on either side of the phantom pixel locations 80 and 81. In the event the multi-segment linear photosensor assembly 10 comprises more than two segments, calculations may be required to generate phantom pixel values at each location where the segments are adjacent to each other.

The number of phantom pixels that may need to be calculated for greater distances 42 is one less than the multiple of the distance 40 used to create the distance 42. In order to minimize image degradation caused by the phantom pixel values, the distance 42 should be the smallest multiple of the distance 40 as may be physically achieved. A smaller distance 42 may allow a greater portion of the image data to be derived from actual photodetector signal values rather than from calculated phantom pixel values.

Processing may be required to generate the values of the phantom pixels. Generating the phantom pixel values may initially involve reading at determining the values of the first and last photodetectors 76 and 77 of adjacent segments 20 and 22, Fig. 1. Determining the values of photodetectors may also be referred to as reading the photodetector or pixel value. The values of the individual first and last photodetectors 76 and 77 may be determined as voltage values representing the light intensity received by each individual first and last photodetector 76 and 77. The voltage values of each photodetector may be converted, as previously described, by an analog to digital converter, to a binary format where the values may be processed using a digital processor. The processor may calculate the phantom pixel values based on the values of the first and last photodetector values of adjacent segments. The phantom pixel values may then be placed into the image data from the multi-segment linear photosensor assembly 10 or stored in the data storage device 67 as to emulate a photodetector at the location 35.

In the case illustrated in Fig. 1, the processor may need to calculate only the value of the single phantom pixel at the location 35 in the gap created by the distance 42. In the case depicted in Fig. 3 where the multi-segment linear photosensor assembly 10 comprise several segments 11, phantom pixel values may need to be calculated for each gap created by the distance 42 where the segments 11 are adjacent to each other. Referring again to Fig. 1, the value of the photodetector 77 on segment 20 and the value of the photodetector 76 on segment 22 may be read by the processor 70. The average between the values of the photodetectors 77 and 76 may then be calculated by the processor 70. This calculated average may be assigned to the value for the phantom pixel at the location 35. The phantom pixel value may be inserted into the data stream from the linear array of photodetectors 30 as though the phantom pixel at the location 35 was a photodetector placed in the photodetector gap created by the distance 42 between the segments 20 and 22. The value of the phantom pixel 35 may also be placed into the data storage device 67 along with the values of the photodetectors 29 in the photodetector array 30 as to emulate a photodetector placed at the location 35 between segments 20 and 22.

Generating phantom pixel values for larger gaps as depicted in Fig. 4 may involve calculating the values for more than one phantom pixel location. In the case depicted in Fig. 4, two phantom pixel values for the locations 80 and 81 may need to be calculated. The processor 70, not shown, may determine the values of the last photodetector 77 on segment 20 and the first photodetector 76 on segment 22 as previously described. Based upon the values of the photodetectors 76 and 77, the processor may perform several calculations to generate the values of the phantom pixel values for the locations 80 and 81. One calculation to generate the phantom pixel values for the locations 80 and 81 is averaging as previously described. Another calculation to generate the values of the phantom pixels at locations 80 and 81 is linear interpolation. Linear interpolation is known in the art and yields a more gradual transition for the phantom pixel values at the locations 80 and 81 between the photodetectors 76 and 77 than averaging does. Using linear interpolation, the phantom pixel value at the location 80 may have a value of one third the difference between the values of the photodetectors 76 and 77 plus the value of the photodetector 77. Likewise, the phantom pixel value at the location 81 may have a value of two thirds the value of the difference between the photodetectors 76 and 77 plus the value of the photodetector 77.

Linear interpolation may be used to calculate the values of phantom pixel locations for any width of the distance 42. The values of the phantom pixels may be interpolated using linear interpolation by the formula:

$$P(n) = \frac{P2\text{-}P1}{(N+1)} \times (n) + P1$$

where:

n is a whole number representing the nth phantom pixel location to be calculated;
P(n) is the value of the phantom pixel at the nth location;
N is the total number of phantom pixels that are to be calculated, which is one less than the multiple of the distance 40 used to create the gap 42;
P1 is the value of the photodetector 77; and
P2 is the value of the photodetector 76.

Extrapolation may be used as an alternate method to calculate the values of the phantom pixels. Referring to Fig. 1, the difference between the values of the photodetectors 77 and 76 on either side of the gap 42 may be calculated by the processor 70. The processor 70 may then compare the difference between the values of the photodetectors 77 and 76 to a predetermined value. If the difference is greater than the predetermined value, the processor 70 may determine that multi-segment linear photosensor assembly is imaging an area of high contrast such as the edge of a line at the location of the photodetector gap created by the distance 42. In this situation, the photodetector 76 may be receiving low intensity light and the photodetector 77 may be receiving a high intensity of light. In order to maintain the area of high contrast, the value of the phantom pixel 35 may be generated by making the value of the phantom pixel 35 equal to either the value of the last photodetector 77 on the segment 20 or the first photodetector 76 on the segment 22. In this manner, the area of high contrast present in the object may be maintained in the image without the greying effect inherent in linear interpolation and averaging.

Extrapolation may also be used in cases, such as illustrated in Fig. 4, where phantom pixel values at locations 80 and 81 may need to be generated. The processor 70, not shown in Fig. 4, may first determine if an area of high contrast is being imaged between the segments 20 and 22. The processor 70 may take the difference between the values of the last photodetector 76 on the segment 20 and the first photodetector 77 on the segment 22. The difference of the photodetector values may be compared to a predetermined value as previously described. If the absolute value of the difference is greater than the predetermined value, the processor 70 may determine that an area of high contrast is being imaged. The processor 70 may then generate the phantom pixel values so that the phantom pixel at the location 80 may have the value of the photodetector 77 on segment 20 and the phantom pixel at the location 81 may have the value of the photodetector 76 on segment 22. This extrapolation technique may maintain an area of high contrast across the extended distance 42 between the segments 20 and 22. Extrapolation may also be used to calculate the values of phantom pixels in multi-segment linear photosensor assemblies where more than two phantom pixel locations may need to be generated. Where more than two phantom pixel values need to be generated, the phantom pixel values may be equal to their nearest photodetectors, which may maintain the area of high contrast.

Fig. 6 illustrates a process that may be used to determine the values of single phantom pixels as depicted in Fig. 3. The process depicted in Fig. 6 may be used where the processor receives pixel information simultaneously from all the segments 11. A pixel counter may be set to one. The values of the first photodetectors 76 may be input into a memory array as P(S,1), where S represents the segment number and one indicates the value of the first photodetector 76. The pixel counter may then be repeatedly incremented by one until the pixel counter equals the number of photodetectors 29 on a segment 11. Each time the pixel counter is increased, the value of the next photodetector may stored in the memory array at P(S,N) where S is the segment number and N is the photodetector value currently being processed. When all the photodetector values have been stored in the memory array P(S,N), the processor may calculate phantom pixel values for the locations 35 between the segments 11. The processor may determine if an area of high contrast is being imaged between the segments 11 by comparing the difference in photodetector values on either side of the locations 35 to a predetermined value. If the difference is greater than the predetermined value, the processor may assign the value of the last photodetector 77 to the pixel value for the location 35. If the difference is less than the difference, the processor may assign the average of the last photodetector 77 value and the first photodetector 76 value to the phantom pixel for the location 35.

A multi-segment linear photosensor assembly may be used in imaging devices to image scan line portions of an object being imaged. The following description describes an improved multi-segment linear photosensor assembly being used in a contact image sensor-type scanning device. The following description of a use for multi-segment linear photosensor assemblies is for illustration purposes only. It is to be understood that the improved multi-segment linear photosensor assembly may be used in other photoelectric imaging devices where multiple photosensor array segments are used.

Fig. 5 depicts an embodiment of the optics and other devices typically used in a contact image sensor-type scanning device 15. The scanning device 15 may have a light source 50, a lens 58, a multi-segment linear photosensor assembly 10 and a processor 70. The scanning device 15 in Fig. 5 is depicted as imaging a scan line portion 51 of an object 54, e.g. a page of text. Imaging is the process of converting an image of an object to machine readable data. Imaging is often referred to as "scanning."

The light source 50 may be an array of light emitting diodes located in close proximity to the object 54 so as to illuminate the scan line portion 51 of the object. Other light sources that serve to illuminate the scan line portion 51 of the object 54 are known in the art. The lens 58 may be located in close proximity to the object 54 so as to receive light 53 reflected from the scan line portion of the object 54. The lens 58 may have a 1:1 optical reduction ratio and serves to focus the scan line portion 51 of the object 54 onto the multi-segment linear photosensor assembly 10. An example of such a lens 58 is the SELFOC lens array, referred to as an SLA, manufactured by Micro Optics Company, Limited, a subsidiary of the Nippon Sheet Glass, Limited. SELFOC is a registered trademark of Nippon Sheet Glass, Limited.

The multi-segment linear photosensor assembly 10 may be located in close proximity to the lens 58 so that the arrays of photodetectors, not shown in Fig. 5, on the multi-segment linear photosensor assembly 10 face the lens 58. The multi-segment linear photosensor assembly 10 may comprise a plurality of linearly arranged photosensor array segments, not shown in Fig. 5. One example of a photosensor array segment is the linear optical array, model number TSL2301, commercially available from Texas Instruments, Inc. of Austin, Texas. The multi-segment linear photosensor assembly 10 may generate electrical data corresponding to light focused the array of photodetectors on the multi-segment linear photosensor assembly 10.

The processor 70 may be located internal or external to the scanning device 15 and may be electrically connected to the multi-segment linear photosensor assembly 10 by a data line 72. The processor 70 may be any processor as is known in the art that may process image data from a multi-segment linear photosensor assembly. The processor 70 may comprise a microprocessor 65 electrically connected to a data storage device 67. The processor 70 may have the additional capability of performing calculations to generate phantom pixel values to be placed in the multi-segment linear photosensor assembly data output. Examples of such calculations are linear interpolation, averaging, and extrapolation.

The scanning device depicted in Fig. 5 is shown scanning an object 54, such as a piece of paper. The light source 50 may emit light 52, which may illuminate a scan line portion 51 of the object 54. Light 53, reflected from the object 54, may be collected by the lens 58. The lens 58 may focus the narrow scan line portion 51 of the object 54 onto the multi-segment linear photosensor assembly 10 via an image beam 59. The multi-segment linear photosensor assembly 10 may then generate electrical signals corresponding to light it receives. The multi-segment linear photosensor assembly 10 therefore generates electrical data representing the scan line portion 51 of the object 54. The object 54 may be moved relative to the scanning device 15 so the multi-segment linear photosensor assembly 10 may generate electrical data corresponding to successive scan line portions 51 of the object 54.

The multi-segment linear photosensor assembly 10 may output the electrical data representing scan line portions 51 of the object 54 to the processor 70 via the data line 72. The data line 72 may be electrically connected to the microprocessor 65 and the microprocessor 65 may in turn be electrically connected to the data storage device 67. The data output from the multi-segment linear photosensor array 10 may be processed by the microprocessor 65 and stored in the data storage device 67.

The processor 70 may process and store the image data generated by the multi-segment linear photosensor assembly 10. The processor 70 may also generate phantom pixel values to emulate photodetectors located between the photosensor array segments, not shown in Fig. 5, as previously set forth. The microprocessor 65 may insert the phantom pixel values into the data stream from the multi-segment linear photosensor assembly 10 as to emulate photodetectors between the photosensor array segments. Alternatively, the microprocessor 65 may insert the phantom pixel values into the data storage device 67 as to emulate photodetectors between the photosensor array segments.

As the scanning device 15 is moved relative to the object 54, multi-segment linear photosensor assembly 10 may generate successive scan line image data of the object 54. The data may be stored in the data storage device 67 along with the phantom pixel values. The collection of successive scan line images of the object 54 along with the phantom pixel values may represent the whole object after the object has been imaged. The image representing the object will appear as though the multi-segment linear photosensor assembly 10 consisted of at least one uninterrupted linear array of photodetectors all spaced a constant distance from each other.

It is contemplated that the inventive concepts herein described may be variously otherwise embodied and it is intended that the appended claims be constructed to include alternative embodiments of the invention except insofar as limited by the prior art.

**Claims**

1. A multi-segment linear photosensor assembly (10) comprising first (20) and second (22) adjacent photosensor array segments, each photosensor array segment having a first end (16) and a second end (17) and comprising at least one linear array (30) of photodetectors (29) formed thereon, said linear array (30) of photodetectors (29) extending between said first end (16) and said second end (17), said array (30) of photodetectors (29) including a first photodetector (76) located at said first end (16) and a last photodetector (77) located at said second end (17), each of said photodetectors (29) having a centerline (AA) wherein the distance (40) between said centerlines of adjacent ones of said photodetectors (29) is a constant distance, and wherein said photosensor array segments are aligned to form a linear array of photodetectors (30) wherein the distance (42) between the last photodetector (77) on said first photosensor array segment (20) and the first photodetector (76) on said second photosensor array segment (22) is a distance that is a multiple of said constant distance (40) between said photodetector centerlines.

2. The multi-segment linear photosensor assembly (10) of claim 1 wherein said multi-segment linear photosensor assembly (10) further comprises a second photodetector (90) located next adjacent to said first photodetector (76) and a second to last photodetector (91) located next adjacent to said last photodetector (77); wherein the distance between said first photodetector (76) and said second photodetector (90) is not equal to said constant distance (40) between photodetectors (29), or wherein the distance between said last photodetector (77) and said second to last photodetector (91) is not equal to said constant distance (40) between photodetectors (29); and wherein the distance between said second to last photodetector (91) on said first photosensor (20) array segment and said second photodetector (90) on said second photosensor array segment (22) is a distance of a multiple of said constant distance (40) between said photodetector centerlines.

3. The multi-segment linear photosensor assembly (10) of claim 1 wherein said distance (42) between said last photodetector (77) on said first photosensor array segment (20) and said first photodetector (76) on said second photosensor array segment (22) defines a photodetector gap (35), and wherein said first (76) and last (77) photodetectors on each side of said photodetector gap (35) produce first and last photodetector signal values respectively, and further comprising a processor (70) wherein said processor (70) generates at least one phantom pixel value for at least one of said photodetector gaps.

4. The multi-segment linear photosensor assembly (10) of claim 3 wherein said phantom pixel values at least one of said photodetector gaps (35) are linearly interpolated based said first (76) and last (77) photodetector signal values on either side of said photodetector gap (35).

5. The multi-segment linear photosensor assembly (10) of claim 3 wherein said processor (70) calculates the difference between said first (76) and last (77) photodetector signal values on each side of at least one of said photodetector gaps and compares said difference to a predetermined value, and wherein said processor (70) generates at least one phantom pixel value equal to said first (76) or last (77) photodetector signal value on either side of said photodetector gap (35) if the absolute value of said difference is greater than said predetermined value.

6. The multi-segment linear photosensor assembly (10) of claim 3 wherein said phantom pixel values for at least one of said photodetector gaps are equal to the average of said first photodetector (76) signal value and said last photodetector (77) signal value on either side of said photodetector gap (35).

7. The multi-segment linear photosensor assembly (10) of claim 3 further comprising a data storage device (67) operatively connected to said processor (70) wherein said data signal of said multi-segment linear photosensor assembly (10) is stored in said data storage device (67).

8. The multi-segment linear photosensor assembly (10) of claim 7 wherein said phantom pixel values are stored in said data storage device (67) as to emulate photodetectors located in at least on of said photodetector gaps.

9. A method of minimizing image distortions between photosensor array segments in a multi-segment linear photosensor assembly (10) wherein said multi-segment linear photosensor assembly (10) comprises first (22) and second (20) adjacent photosensor array segment, said photosensor array segments having a first end (16) and a second end (17) and comprising at least one linear array (30) of photodetectors (29) extending between said first end (16) and said second end (17) , said linear array (30) of photodetectors (29) having a first photodetector (76) located at said first end (16) and a last photodetector (77) located at said second end (17), each of said photodetectors (29) having a centerline wherein the distance (40) between said centerlines of adjacent ones of said photodetectors (29) is a constant distance; said method comprising aligning said photosensor array segments so that said first end (16) of said first photosensor array segment (22) is next adjacent said second end (17) of said second photosensor array segment (20); and positioning said first (22) and second (20) photosensor array segments a distance (42) from each other so that the distance between said last photodetector (77) on said second photosensor array segment (20) and said first photodetector (76) on said first photosensor array segment (22) is a multiple of said constant distance (40) between photodetectors (29) on said photosensor array segments.

10. The method of minimizing image distortions between photosensor array segments in a multi-segment linear photosensor assembly (10) of claim 9 wherein said distance (42) between said first photodetector (76) on said first photosensor array segment (22) and said last photodetector (77) on said second photosensor array segment (20) creates a photodetector gap, and further comprising generating phantom pixel values for at least one of said photodetector gaps.

**FIG. 1**

EP 0 975 143 A2

*FIG. 2*

**FIG. 3**

EP 0 975 143 A2

FIG. 4

**FIG. 5**

```
┌─────────────────────────────────┐
│   SET PIXEL COUNTER TO ONE      │
└─────────────────────────────────┘
              │
              ▼
┌─────────────────────────────────┐
│  STORE THE NUMBER 1 PIXEL VALUE │
│  IN MEMORY AS P(S,1), WHERE P IS│
│  THE PIXEL VALUE AND S IS THE   │
│    SEGMENT NUMBER FOR THE       │
│     NUMBER 1 PIXEL VALUE        │
└─────────────────────────────────┘
              │
              ▼
┌─────────────────────────────────┐
│  INCREMENT THE PIXEL COUNTER,   │
│          N=N+1                  │
└─────────────────────────────────┘
              │
              ▼
┌─────────────────────────────────┐
│   STORE THE Nth PIXEL VALUES OF │
│ THE Sth SEGMENT IN MEMORY, P(S,N)│
└─────────────────────────────────┘
```

IS N EQUAL TO THE LAST PIXEL ?  —  NO / YES

```
┌─────────────────────────────────┐
│ GENERATE PHANTOM PIXEL VALUES   │
│   FOR THE PIXELS P(S,N+1) FOR   │
│    S=1 TO M-1, WHERE THERE ARE  │
│  M SEGMENTS IN THE MULTI-SEGMENT│
│  LINEAR PHOTOSENSOR ASSEMBLY    │
└─────────────────────────────────┘
```

$$Y = ABS[P(S,N) - P(S+1,1)]$$

IS Y > X WHERE X IS A PREDETERMINED VALUE ? — YES → $P(S,N+1) = P(S,N)$ / NO

**FIG. 6**

$$P(S,N+1) = \frac{P(S,N) + P(S+1,1)}{2}$$